# EUROPÄISCHE PATENTSCHRIFT

(11) **EP 0 491 259 B1**
(45) Veröffentlichungstag und Bekanntmachung des Hinweises auf die Patenterteilung: **30.11.1994**
(21) Anmeldenummer: 91121119.1
(22) Anmeldetag: 10.12.1991
(51) Int. Cl.: B23Q 17/00

(54) **Vorrichtung zur Überwachung von Spannkräften in Drehfuttern**
Control device for clamping forces in chucks
Dispositif pour contrôler les forces de serrage dans un mandrin

(30) Priorität: 17.12.1990 DE 4040309
(43) Veröffentlichungstag der Anmeldung: 24.06.1992
(73) Patentinhaber: Spur, Günter, Prof. Dr.-Ing. Drs. h.c., D-14193 Berlin (DE); Lehmann, Wilfried Richard, Dr.-Ing., D-10713 Berlin (DE); Stelzer, Carsten, Dr.-Ing., D-14195 Berlin (DE)
(72) Erfinder: Spur, Günter, Prof. Dr.-Ing. Drs. h.c., D-14193 Berlin (DE); Lehmann, Wilfried Richard, Dr.-Ing., D-10713 Berlin (DE); Stelzer, Carsten, Dr.-Ing., D-14195 Berlin (DE)

(56) Entgegenhaltungen:
- EP-A- 0 079 131
- EP-A- 0 356 636
- DE-A- 3 212 759
- US-A- 4 909 521

## Beschreibung

Die Erfindung bezieht sich auf eine Vorrichtung gemäß dem Oberbegriff des Anspruches 1 (EP-A-0 079 131).

Die Entwicklung spanender Werkzeugmaschinen ist geprägt von der Forderung nach möglichst hoher Wirtschaftlichkeit. Möglichkeiten zur Steigerung der Wirtschaftlichkeit bestehen bei der Einzel- und Kleinserienfertigung in der Senkung der Rüstzeit, bei der Massenfertigung in der Senkung der Haupt- und Nebenzeit. Folge davon sind flexibel automatisierte Fertigungssysteme, steigende Schnittgeschwindigkeiten und höhere Antriebsleistungen.

Für das Fertigungsverfahren Drehen, das mit etwa 30% den größten Anteil innerhalb der spanenden Verfahren einnimmt, muß vor dem Hintergrund steigender Antriebsleistungen und höherer Schnittgeschwindigkeiten insbesondere dem Spannmittel eine viel größere Aufmerksamkeit als bisher geschenkt werden.

Das am häufigsten angewendete Spannzeug ist nach wie vor das Dreibackenfutter, da dieses entscheidende Vorteile gegenüber anderen Spannzeugen bietet. Es sind dies die universelle Einsetzbarkeit über einen großen Durchmesserbereich, die einfache Umrüstbarkeit von Außen- auf Innenspannung und die eindeutig bestimmte Werkstücklage durch die Dreipunktspannung.

Dem Einsatz von konventionellen Backenfuttern bei höheren Schnittgeschwindigkeiten und somit hohen Drehzahlen sind jedoch Grenzen gesetzt, da die an den Spannbacken auftretenden Fliehkräfte die anfänglich vorhandene Spannkraft drastisch reduzieren können. Berücksichtigt man, daß die Fliehkräfte mit dem Quadrat der Drehzahl zunehmen, so ist von einer vermehrten Spannzeugbelastung unter gleichzeitiger Abnahme des Spannvermögens auszugehen. Berücksichtigt man ferner, daß das Systemverhalten von Backenfuttern in der Regel nicht eindeutig bestimmbar ist, sondern von einer Fülle von Einflußgrößen wie Reibungsbeiwert und Übersetzungsverhalten des Futtergetriebes, den Fliehkräften an den Spannbacken und den Steifigkeiten von Futter und Werkstück abhängt, so muß das Drehfutter innerhalb des Bearbeitungsprozesses "Drehen" als schwächstes Glied angesehen werden.

Der mangelnden Kenntnis über das Systemverhalten wird dadurch Rechnung getragen, daß bei Bemessung der Spann- und Betriebsbedingungen entsprechend hohe Sicherheitsfaktoren Berücksichtigung finden. Allerdings wird die sogenannte "Grenzdrehzahl" konventioneller Backenfutter nicht durch die Spannzeugbelastung, sondern durch den Spannkraftverlust, d.h. Abfall der Spannkraft unter einen vorgegebenen Grenzwert, bestimmt. Die Festlegung dieses Grenzwertes erfolgt derzeit in der Praxis unter unzureichender Berücksichtigung des Systemverhaltens, so daß von seiten des Spannzeugs unausgeschöpfte Nutzungsreserven vorhanden sind.

Neben einer starken Erhöhung der Spannkräfte bei kraftbetätigten Dreibackenfuttern in den letzten Jahren, sind durch konstruktive Änderungen und Neuentwicklungen derzeit Drehfutter verfügbar, die beispielsweise bei einem Futterdurchmesser von 200 mm eine maximale Drehzahl von ca. 6.000 min⁻¹ ermöglichen. Demgemäß gewinnt bei hohen Drehzahlen die Nutzung der Leistungsreserven von Spannzeugen an Bedeutung. Es sind zwei Entwicklungsrichtungen erkennbar:
- Erweiterung des Einsatzumfanges der Drehmaschine durch Eliminieren der Unsicherheiten, die von den tribologischen und dynamischen Einflüssen auf das Spannverhalten herrühren. Dies setzt voraus, daß die tatsächlich verfügbaren Spannkräfte ermittelt werden.
- Erweiterung des Einsatzumfanges durch Absicherung des Prozesses gegenüber instantionären Einflüssen auf das Spannverhalten. Dies setzt voraus, daß das Spannverhalten ständig überwacht wird.

Berechnungsverfahren zur Bestimmung der Futterspannkraft im Betrieb unter Berücksichtigung aller Einflußgrößen sind derzeit nicht bekannt. So bleibt beispielsweise der Einfluß des Schmierungszustandes und der Systemsteifigkeit unberücksichtigt, und die gesamte Fliehkraft wird als spannkraftreduzierend angesetzt.

Die Festlegung der Einspannbedingungen in Drehfuttern erfolgt entweder nach der notwendigen Spannkraft bei vorgegebener Schnittkraft oder häufiger nach der maximal möglichen Schnittkraft bei vorgegebener Spannkraft. Insbesondere bei der einseitigen Werkstückspannung ist die Schnittkraft zu beachten, deren Komponenten am Drehfutter eine Axialkraft sowie ein Torsions- und Kippmoment bewirken. Entscheidend ist das Kippmoment, da davon ausgegangen werden kann, daß infolge exzentrischen Kraftangriffs in jedem Fall ein Kippen des Werkstücks um eine von zwei Backen gebildete Kippachse durch Rutschen an der dritten Spannbacke erfolgt. Demgemäß werden rechnerische Modelle hergeleitet, mit denen das maximale Kippmoment ohne und mit Berücksichtigung des Werkstückgewichts bestimmt wird.

Die Schnittkraftkomponenten verursachen auch eine elastische Deformation von Drehfutter und Werkstück. Der hauptsächlich für die Verformung zuständige Anteil ist die Passivkraft, die eine Biegung der Hauptspindel sowie eine radiale Verformung und ein Kippen des Futters bewirkt.

Da die Überlegungen das Problem jedoch rein statisch erfassen, können sie nur als grobe Näherung angesehen werden.

Eine ständige Überwachung des Spannzustandes ist derzeit nur unzureichend möglich. Die Spannkraft kann mittels statisch oder dynamisch arbeitenden Meßsystemen ermittelt werden. Gemeinsames Merkmal aller in der Praxis eingesetzten Systeme ist ein Kraftmeßelement, das anstelle eines Werkstückes im Futter gespannt wird. Damit geht einher, daß derzeit in der Praxis eine Spannkraftüberwachung während des Zerspanprozesses nicht möglich ist.

Bei einfachen statisch messenden Systemen erfolgt die Umsetzung der Kraft in einen hydraulischen Druck und die Anzeige auf einer kalibrierten Manometerskala. Elektronische Geräte messen die Spannkraft standardmäßig unter Anwendung von Sensoren auf der Basis von Dehnungsmeßstreifen.

Statisch messende Systeme haben den Nachteil, nicht den Einfluß des Schmierungszustandes auf den dynamischen Spannkraftverlust zu ermitteln. Aus diesem Grund sind Meßsysteme entwickelt worden, bei denen ein im Futter mitdrehendes Sensorelement die resultierende Spannkraft bei Rotation des Drehfutters erfaßt. Bei diesen Systemen ist jedoch zu beachten, daß auch der Spannkraftsensor eine bestimmte Eigensteife besitzt, so daß der ermittelte Spannkraftverlauf nur gültig ist für Werkstücke, die über den gleichen Steifigkeitswert wie der Sensor verfügen. Ein allgemeiner, jedoch in die Praxis nicht eingegangener Vorschlag wird ohne nähere Angaben in der DE-OS 28 46 337 erläutert.

Ferner ist ein dynamisch arbeitendes Spannkraftmeßsystem bekannt, mit dem der tatsächliche Spannkraftverlauf für das jeweils zu spannende Werkstück ermittelt werden kann. Dazu wird ein Spannkraftsensor im Drehfutter gespannt und der Spannkraftverlauf bei Hochlauf der Maschine aufgenommen. Die so gemessenen Werte von Spannkraft und Drehzahl werden in einem Mikroprozessor zur weiteren Verarbeitung gespeichert. Nach Eingabe der Systemsteifigkeiten von Drehfutter, Sensor und Werkstück erfolgt eine Umsetzung der Meßwerte auf die Verhältnisse beim jeweiligen Werkstück. (Dynamisches Spannkraftmeßsystem, FORSAVE-D., Düsseldorf: Paul Forkardt, Firmenschrift 620.01.2D-1.)

In der EP-A 0 079 131 ist eine Vorrichtung zur Überwachung von Spannkräften in Drehfuttern beschrieben, bei der ein als Dehnungsmeßstreifen ausgebildeter Sensor direkt auf der Grundbacke im Aufnahmebereich der Aufsatzbacke aufgebracht ist.

Der vorliegenden Erfindung liegt die Aufgabe zugrunde, eine Vorrichtung zur Überwachung von Spannkräften in Drehfuttern zu schaffen, die eine statische und dynamische Erfassung der Spannkräfte mit nur einem Sensor im gesamten Durchmesserbereich ermöglicht.

Diese Aufgabe wird von einer Vorrichtung mit den Merkmalen des Anspruches 1 gelöst.

Die besonderen Vorteile der Erfindung und deren Ausgestaltung gemäß der abhängigen Ansprüche liegen darin,
- daß bereits ein einziger Sensor an einer besonders geeigneten Fläche der Grundbacken des Drehfutters genügt, um die Werkstückhaltekräfte im gesamten Durchmesserbereich des Drehfutters zu überwachen.
- Diese Art von Überwachungsvorrichtung berücksichtigt im Stillstand und besonders im dynamischen Betrieb das Verhalten des gesamten Spannsystemes einschließlich des Werkstücks.
- Der Spannkraftverlust, der durch Fliehkräfte hervorgerufen wird, kann mit dem einen Sensor ständig erfaßt und überwacht werden. - Später in der Prozeßregelung kann er dann kompensiert werden. Dadurch wird eine hohe Prozeßsicherheit gewährleistet.
- Mit dem einen Sensor im T-Nuten-Steg der Grundbacke kann die Spannkraft ständig überwacht werden, daß heißt, es ist eine echte Inprozeß-Messung während der Bearbeitung eines Werkstückes möglich.
- Die sehr hohe Genauigkeit der bisherigen Spannsysteme bleibt trotz des Einbaus eines Sensors erhalten.
- Das Spannsystem wird überhaupt nicht geschwächt.
- Die hohe Flexibilität der am Markt befindlichen Spannfutter bleibt völlig unbeeinflußt, d.h. das Futter ist weiterhin sehr universell einsetzbar.
- Eine Zustandsdiagnose des Spannsystemes wird ermöglicht.
- Weitere Prozeßsignale (beispielsweise Zerspankräfte) können erkannt werden.

Mit Hilfe der Zeichnungen soll die Erfindung anhand eines Ausführungsbeispieles näher erläutert werden.

Es zeigt:
- Figur 1: eine schematische Darstellung einer Vorrichtung zur Spannkraftüberwachung;
- Figur 2: eine Grundbacke eines Keilhakenfutters und
- Figur 3: eine Einzelheit mit Überwachungssensor.

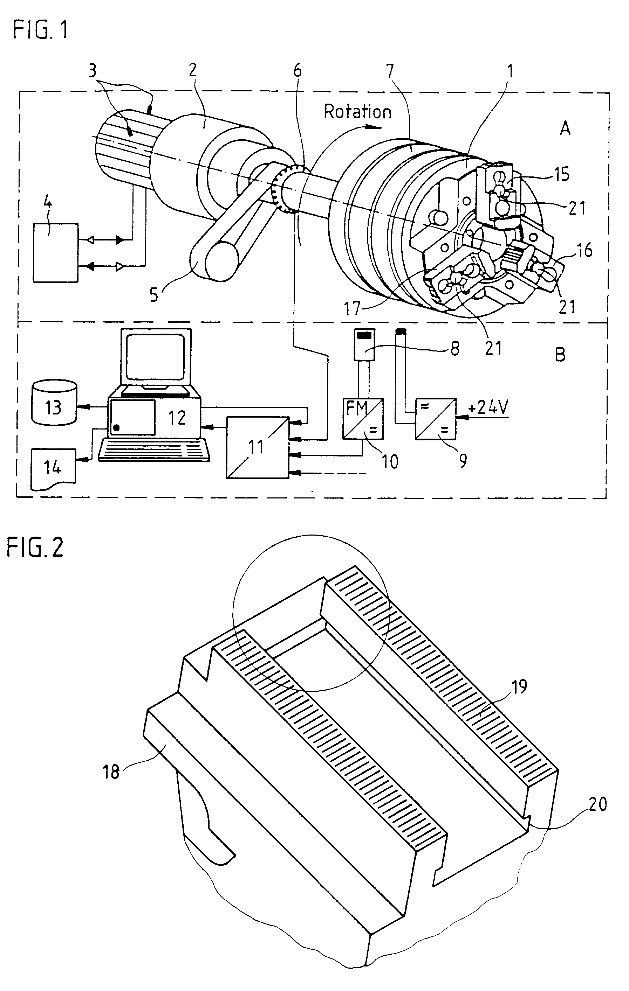

Die in Figur 1 dargestellte Vorrichtung umfaßt sowohl den mechanischen bzw. elektromechanischen Teil A der Überwachungsvorrichtung als auch den elektronischen Auswerte-Teil B, wobei letzterer vor allem für die durch die Überwachung mögliche Drehprozeßregelung zuständig ist.

Mit 1 ist ein sogenanntes Kraftspannfutter bezeichnet, welches mit Hilfe eines Kraftspannzylinders 2 betätigt wird. Eine Hubüberwachungseinrichtung 3 überwacht den Hub der Spannbacken, auf die später näher eingegangen wird. Von einem Druckmittel-Generator 4 wird der erforderliche Spanndruck für den Kraftspannzylinder 2 geliefert. Ein Antrieb 5 erzeugt die Rotationsbewegung und wird in der Praxis durch den Antrieb einer Drehmaschine realisiert. Zur Erfassung der Drehzahl dient eine Vorrichtung, die als inkrementales Winkelmeßsystem 6 ausgebildet sein kann.

Mit 7 ist ein Spulenring eines Übertragungssystemes 7, 8, 9 für die Sensordaten bezeichnet, welches in Teil B eine Empfangsspule 8 aufweist, und bei dem mit 9 die induktive Stromübertragung bezeichnet ist. Ein Diskriminator 10 wandelt die übertragenen Frequenzwerte in Spannungswerte um, die ihrerseits von einem Analog-/Digital-Wandler 11 für die Auswertung in einem Rechner 12 aufbereitet werden. Der Rechner 12 ist mit einem Datenspeicher 13 und mit einer Datenausgabe-Einrichtung 14 verbunden.

Die bereits erwähnten, jedoch vorher noch nicht bezeichneten Spannbacken 15, 16 und 17 sind in üblicher Weise radial im Kraftspannfutter 1 einstellbar. Die Spannbacken 15, 16 und 17 sind zweiteilig ausgeführt und bestehen aus hier nicht erkennbaren Grundbacken und sogenannten Aufsatzbacken, die mit 15, 16 und 17 bezeichnet sind. Die Aufsatzbacken sind üblicherweise austauschbar und bieten dadurch eine Vielzahl von Spannmöglichkeiten. Die Grundbacken befinden sich im Inneren des Kraftspannfutters 1 und werden direkt durch den Spanndruck betätigt. Im allgemeinen sind die Grundbacken nicht austauschbar, sie dienen zur Aufnahme der Aufsatzbacken 15, 16 und 17, die mit Hilfe der Grundbacken verstellbar sind.

Eine Grundbacke 18 eines Keilhakenfutters 1 ist in Figur 2 dargestellt. Die perspektivische Draufsicht zeigt schematisch eine Spitzverzahnung 19, in die die Unterseite einer austauschbaren Aufsatzbacke 15, 16, 17 gemäß Figur 1 eingreift. Die in Figur 2 nicht dargestellte Aufsatzbacke 15, 16, 17 wird mit der Grundbacke 18 verschraubt. Dazu wird eine nicht dargestellte verdrehsichere Mutter, die T-förmig ausgebildet ist, in die T-Nut 20 der Grundbacke 18 eingeführt. Die T-Nut 20 ist ebenfalls nur schematisch dargestellt. Mit einer Schraube 21, die in Figur 1 innerhalb der Aufsatzbacken 15, 16 und 17 angedeutet ist, erfolgt mittels T-förmiger Mutter die Verschraubung von Grund- und Aufsatzbacken.

Die T-Nut verhindert das Mitdrehen der T-förmigen Mutter, so daß ohne weiteres ein sicherer Verbund der beiden Backenteile gewährleistet ist.

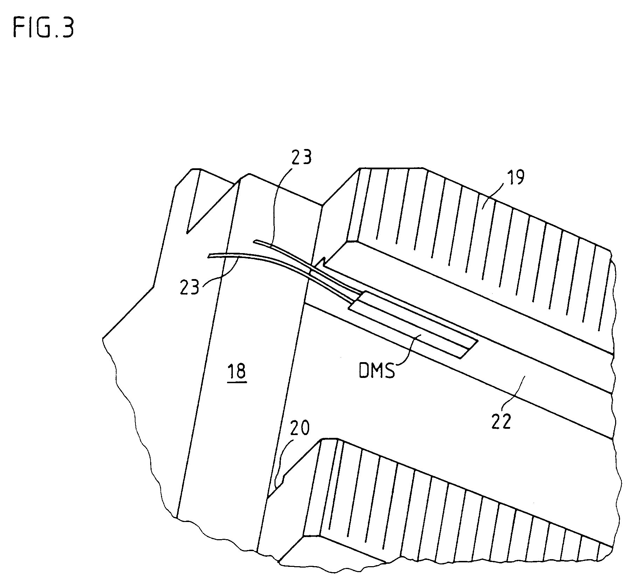

In Figur 3 ist ein vergrößertes Fragment der Grundbacke 18 dargestellt, das etwa dem Kreis in Figur 2 entspricht. An einer Fläche der T-Nut20 - hier am T-Nuten-Steg 22 - ist ein Sensor in Form eines Dehnungsmeßstreifen DMS flächig aufgebracht. Der Dehnungsmeßstreifen DMS trägt nicht auf, so daß die T-Nut-Mutter in der T-Nut 20 ohne Störung geführt bleibt. Eine Verkabelung 23 führt vom Dehnungsmeßstreifen DMS zum Spulenring 7, von dem aus die Daten berührungslos in die Auswerteelektronik B übertragen werden können.

Die Besonderheit dieses Meßortes ist, daß die Höhe der Meßsignale unabhängig vom Kraftangriffspunkt sind und folglich nur ein Sensor erforderlich ist.

Darüber hinaus gelingt es bei entsprechender Verstärkung der Verformungssignale durch Sensoren in der Grundbacke, beispielsweise Schnittkräfte zu erfassen.

Die spannkraftbedingten Verformungen werden in der Grundbacke 18 des Drehfutters 1 mit dem direkt aufgebrachten Verformungs-Sensor DMS kontinuierlich erfaßt und liefern nach einer vorher durchgeführten Kalibrierung ein spannkraftproportionales Meßsignal. Dadurch läßt sich der Systemzustand der Spanneinrichtung ständig überwachen. Weiterhin kann unter Verwendung dieser Meßsignale eine Drehprozeßregelung zur Optimierung des Zerspanprozesses aufgebaut werden.

Der Dehnungsmeßstreifen DMS ist ein marktgängiger Verformungsaufnehmer und wird ohne zusätzlichen Teileaufwand auf der Grundbacke 18 aufgebracht. Die Flexibilität des Backenfutters 1 bleibt erhalten, weil das Meßsignal für alle Stellungen und Stufen der Aufsatzbacken 15, 16, 17 richtig erfaßt wird.

Zur Temperaturkompensation wird der Sensor DMS in an sich bekannter Weise als Halb- oder Vollbrücke verschaltet.

Der Sensor DMS nimmt nach einer statischen und dynamischen Kalibrierung durch die Belastungen im Spannsystem ein spannkraftproportionales Meßsignal auf. Das Meßsignal kann mit Hilfe eines berührungslos arbeitenden Telemetrie-Systems 7, 8, 9 übertragen und verstärkt, sowie zur Drehprozeßregelung der elektronischen Auswerteeinrichtung B übergeben werden. Der Meßort liegt sehr nahe der Spannstelle, ist vor störenden Umgebungseinflüssen geschützt und es kann dadurch ein exaktes Spannkraftsignal auf einfache Weise erfaßt werden. Ein bestehendes Spannsystem muß außerdem nicht verändert werden, so daß eine hohe Akzeptanz von Seiten der Anwender gegeben ist.

## Patentansprüche

1. Drehfutter mit einer Vorrichtung zur Überwachung von Spannkräften mittels wenigstens eines an einer Grundbacke (18) angeordneten Verformungssensors, dadurch gekennzeichnet, daß ein einziger Sensor auf der inneren zurückversetzten Seitenfläche eines T-Nuten-Steges (22) der Grundbacke (18) angeordnet ist, so daß die Spannkraft für jeden Spannradius innerhalb des Spannradienbereichs der zur Grundbacke (18) gehörigen Aufsatzbacken (15, 16, 17) direkt und kontinuierlich erfaßt wird.

2. Drehfutter nach Anspruch 1, dadurch gekennzeichnet, daß der Sensor (DMS) als Dehnungsmeßstreifen ausgebildet ist, der direkt auf der Seitenwand des T-Nut-Steges (22) der Grundbacke (18) aufgebracht ist.

3. Drehfutter nach Anspruch 1, dadurch gekennzeichnet, daß der Sensor (DMS) statisch und dynamisch kalibrierbar ist.

4. Drehfutter nach Anspruch 1, dadurch gekennzeichnet, daß der Sensor (DMS) als Halb- oder Vollbrücke verschaltet ist.

5. Drehfutter nach Anspruch 1, dadurch gekennzeichnet, daß durch den Sensor (DMS) ein Prozeßregelkreis beaufschlagbar ist.

6. Drehfutter nach den Ansprüchen 1 und 5, dadurch gekennzeichnet, daß durch den Sensor Prozeßsignale, beispielsweise Zerspankräfte, erkannt werden und dem Prozeßregelkreis zugeführt werden können.

## Claims

1. A chuck with a device for monitoring clamping forces by means of at least one strain gauge (18) arranged on a master jaw, characterized in that a single gauge is arranged in the inner undercut side surface of a T-slot cross-part (22) of the master jaw (18), so that the clamping force for each clamping radius within the range of clamping radii of the false jaw (15, 16, 17) asscciated with the master jaw (18) is detected directly and continuously.

2. A chuck according to claim 1, characterized in that the gauge (DMS) is formed as an expansion measuring strip, which is applied directly to the sidewall of the T-slot cross-part (22) of the master jaw (18).

3. A chuck according to claim 1, characterized in that the gauge (DMS) can be calibrated statically and dynamically.

4. A chuck according to claim 1, characterized in that the gauge (DMS) is connected in a half or full bridge.

5. A chuck according to claim 1, characterized in that a process control circuit is responsive to the gauge (DMS).

6. A chuck according to claims 1 and 5, characterized in that process signals, for example cutting forces, are determined by the gauge and can be applied to the process control circuit.

## Revendications

1. Mandrin de tournage comprenant un dispositif pour surveiller ou contrôler les forces de serrage avec au moins un capteur de déformation disposé sur un mors de base (18), **caractérisé** par le fait qu'un unique capteur est disposé sur la face latérale interne en retrait de la barre transversale (22) de la rainure en T du mors de base (18) de manière que la force de serrage soit détectée directement et en continu pour chaque rayon de serrage à l'intérieur de la plage de rayons de serrage du mors rapporté (15, 16, 17) appartenant au mors de base (18).

2. Mandrin de tournage suivant la revendication 1, **caractérisé** par le fait que le capteur (DMS) est réalisé sous forme de jauge extensométrique ou de contrainte appliquée directement sur la paroi latérale de la barre transversale (22) de la rainure en T du mors de base (18).

3. Mandrin de tournage suivant la revendication 1, **caractérisé** par le fait que le capteur (DMS) peut être calibré statiquement et dynamiquement.

4. Mandrin de tournage suivant la revendication 1, **caractérisé** par le fait que le capteur (DMS) est monté en demi-pont ou en pont complet.

5. Mandrin de tournage suivant la revendication 1, **caractérisé** par le fait que le capteur (DMS) agit sur un circuit de régulation d'opération.

6. Mandrin de tournage suivant les revendications 1 et 5, **caractérisé** par le fait que des signaux d'opération, par exemple des efforts de coupe, peuvent être décelés à l'aide du capteur et être amenés au circuit de régulation d'opération.
